# EUROPEAN PATENT SPECIFICATION

(11) **EP 2 256 079 B1**
(45) Date of publication and mention of the grant of the patent: **24.10.2012**
(21) Application number: 10161848.6
(22) Date of filing: 04.05.2010
(51) Int. Cl.: B66C 23/52, F03D 1/00, F03D 11/04, B66C 23/34

(54) **Device for assembling a large structure at sea**
Vorrichtung und Verfahren zur Montage einer Struktur auf See
Dispositif et procédé pour assembler une structure en mer

(30) Priority: 28.05.2009 BE 200900330
(43) Date of publication of application: 01.12.2010
(73) Proprietor: GeoSea NV, 2070 Zwijndrecht (BE)
(72) Inventor: Vanderbeke, Koen, B3071, Erps-Kwerps (BE)
(74) Representative: Brouwer, Hendrik Rogier

(56) References cited:
- WO-A-03/066427
- DE-A1- 10 321 850
- US-A- 4 311 434
- US-A1- 2002 171 247
- US-B1- 7 112 010

## Description

The invention relates to a device for assembling a structure at sea. The invention also relates to a method for assembling a structure at sea. The invention relates particularly to a device and method for assembling a wind turbine at sea.

A growing number of structures must be constructed, maintained and repaired at sea. A typical example is an offshore wind turbine which is constructed from a gondola or nacelle which is supported by a mast which can be over 100 metres high. The mast comprises different mast segments generally placed successively one onto another. The gondola is the housing on the mast in which a large part of the necessary equipment is located and which alone can already have a weight of more than 350 tons. The wind turbine is further provided with a hub on which a number of rotor blades are arranged. The hub forms the connection between the rotor blades of the wind turbine and the shaft thereof. The rotor blades, which can have a length of more than 70 metres, convert the kinetic energy of the wind into a rotating movement of the shaft. The currently very common wind turbines are equipped with three rotor blades, wherein the rotor blades can rotate over their longitudinal axis. They can hereby take up the optimal position at any wind speed, thereby achieving an optimum production. They can in this way also be rotated out of the wind at high wind speeds by means of a so-called pitch installation. A typical wind turbine is further provided with a transmission or gearbox to adjust the generator rotation speed (50 Hz) to the rotation speed of the rotors. The generator converts the movement of the shaft into electricity and supplies the generated power to the public grid.

During the assembly, maintenance and/or repair of such large structures at sea it is usual to transport components of the structure to an offshore jack-up platform moored in the vicinity of the location where the structure is situated or must be constructed. For the construction of for instance a wind turbine the mast components and an assembly of rotor blades arranged on a hub are navigated to the location of construction using a suitable vessel. The jack-up platform is provided with a lifting device which can lift the supplied components from the transport vessel and can carry them to the structure to be constructed.

During the lifting and placing of components it is usual for these to have to be placed at least temporarily in a position other than the transport position. Components must more particularly be manipulated in order to move them from their transport position (the position in which the relevant component was transported) to their assembly position (the position in which the relevant component is added onto or to an already existing construction). During lifting and placing of wind turbine rotor blades onto an already existing or constructed mast the jack-up platform is thus provided with an auxiliary crane (a so-called tailing crane) which ensures that the assembly of hub and (for instance three) rotor blades is erected at least partially in vertical direction from the horizontal transport position in order to enable arranging of this assembly on the mast. An outer end of a rotor blade is here secured to the tailing crane.

DE 103 21 850 A1 describes a device for assembling a large structure at sea, in particular a wind turbine. The device comprises a support structure wherein a mast section is movable from a transport position to a mounting position, wherein the section is rotated and/or tilted relative to the transport position. The support structure positions a mast section onto an already installed mast section by means of a crane.

US 7 112 010 B1 likewise describes a device for erecting a large structure at sea, such as a wind turbine. The structure is brought from a horizontal transport position to a vertical position by using a transport ship that is on one side provided with two towers that serve as support for the hoisting of the structure by means of two winches.

The known device and method are time-consuming. The use of a tailing crane for instance takes up a great deal of space on the platform, whereby valuable space is lost. In addition, working with a tailing crane requires good coordination and skill, a lack of which may result in danger.

An object of the present invention is to provide a device with which (components of) large structures, and particularly wind turbines, can be assembled at sea.

This object is achieved by providing a device for assembling a large structure at sea, particularly a wind turbine, which device comprises a support structure for a component of the structure which can be arranged on a transport vessel, wherein a part of the support structure is movable from a transport position, in which the component is transported, to an assembly position in which the component is rotated and/or tilted relative to the transport position, wherein the movable part is also provided with fixing means for fixing of the component, wherein the support structure comprises a tower, and wherein the rotatable part is situated at the top of the tower.

The invention likewise relates to a method for assembling a large structure at sea, particularly a wind turbine, making use of the device according to the invention. The method comprises of providing a device according to the invention on a transport vessel, arranging a component of the structure on the movable part of the device using the fixing means, transporting the component to the location at sea where the component must be assembled using the transport vessel, wherein the component is situated in a transport position during the transport, optionally rotating and/or tilting the movable part of the support structure from the transport position to an assembly position, wherein the component is rotated and/or tilted relative to the transport position, and arranging the component on the structure in the assembly position. Moving the movable part of the support structure from the transport position to an assembly position preferably takes place after mooring of the vessel in the immediate vicinity of the structure to be assembled, and particularly against a jack-up offshore platform moored in the vicinity of the construction location, the platform being provided if desired with a lifting device which can pick up the supplied components from the transport vessel and carry them to the structure to be constructed. It is however also possible for the transport vessel to also serve as mooring platform.

In a further embodiment of the method the transport position can correspond to the assembly position. The component is thus transported in the assembly position, whereby rotation or tilting from the transport position to the assembly position is not necessary.

The component to be transported, rotated and/or tilted can in principle be any component of the structure. The method is particularly suitable for wind turbines wherein the components to be transported, rotated and/or tilted can for instance comprise a gondola or nacelle, and/or a hub, and/or one or more rotor blades.

The use of a tailing crane is avoided by providing a support structure with a movable part, on which part the component can be arranged. A further advantage is that the component can also be placed in any desired angular position relative to the deck of the transport vessel during transport. This improves convenience and safety during transport.

The movable part can in principle be rotatable and/or tiltable around any axis. It is thus possible to provide a movable part which is rotatable and/or tiltable around a vertical axis. This allows placing of the component in an optimal position for the transport and/or for the mounting during the assembly of the structure.

A preferred embodiment of the device according to the invention is **characterized in that** the movable part is tiltable around a horizontal axis. This is particularly useful for the assembly of a wind turbine at sea, wherein an assembly of wind turbine rotor blades must be moved from a transport position, in which the rotor blades extend substantially parallel to the deck of the transport vessel, to an assembly position in which the rotor blades extend substantially perpendicularly of the deck of the transport vessel.

A further preferred embodiment of the device according to the invention is **characterized in that** the movable part is rotatable around a horizontal axis. This is particularly useful for the assembly of a wind turbine at sea, wherein an assembly of wind turbine rotor blades must be moved from a transport position, in which the rotor blades extend substantially perpendicularly of the deck of the transport vessel, to an assembly position in which the rotor blades still extend substantially perpendicularly of the deck of the transport vessel but are rotated relative to the transport position.

The support structure of the device according to the invention comprises a tower, wherein the rotatable part is situated at the top of the tower. This allows the hub of an assembly of rotor blades to be placed at a height such that, when rotor blades are placed in the assembly position, they do not come into contact with the deck of the transport vessel or with other components such as the jack-up platform. The tower can in principle be embodied in any manner. The tower can thus be static or movable. It is advantageous to embody the tower as a static structure, for instance in the form of a framework, or as a beam structure which if desired comprises different rotatable beam segments pivotable relative to each other. Such an embodiment is stable, strong and relatively inexpensive. A framework is moreover light and can be erected as desired in simple manner.

A preferred embodiment of the device according to the invention comprises a tower which is height-adjustable. Not only can components of different dimensions hereby be transported and rotated, the height can moreover be adjusted subject to the conditions on site, such as for instance the desired transport and/or assembly position.

The jack-up offshore platform and/or the transport vessel generally comprise a work deck which can bear a substantial load and anchor piles which support the work deck. Each anchor pile extends substantially vertically and is movable in this direction from a high position during transport to a low position in the anchored position, in which position the piles support on the seabed. The height position of the work deck relative to the water level can be changed by shifting the work deck relative to the piles by means of hydraulic pistons. In the anchored position the work deck can be jacked up to a position above the water level. It is however also possible to only stabilize the platform. Such a platform is only partially jacked up to a level at which the piles support on the seabed but the work deck still partially makes contact with the water. A platform stabilized in this manner can take a lighter form because part of the load is supported by the water.

A component of almost any dimension can in principle be manipulated with the device according to the invention. A preferred embodiment relates to a tower with a maximum height of at least 20 metres above the work deck of the transport vessel, more preferably at least 30 metres, still more preferably at least 40 metres.

The invention will now be elucidated in more detail with reference to the accompanying figures, without otherwise being limited thereto. In the figures:
Fig. 1A is a schematic side view of an embodiment of the device according to the invention during transport;
Fig. 1B is a schematic side view of a second embodiment of the device according to the invention during transport;
Fig. 2A is a schematic side view of the embodiment shown in figure 1A during assembly; and
Fig. 2B is a schematic side view of the embodiment shown in figure 1B during assembly; and
Fig. 3 is a schematic top view of the embodiment of the device according to the invention shown in figure 2A during assembly.

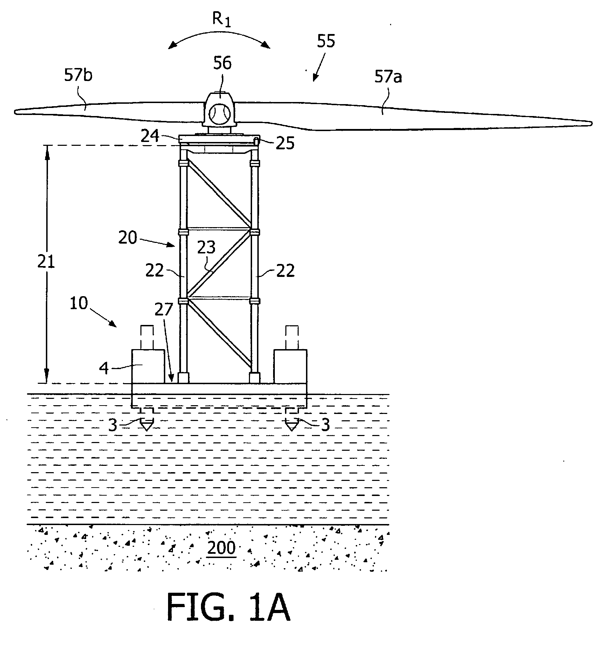

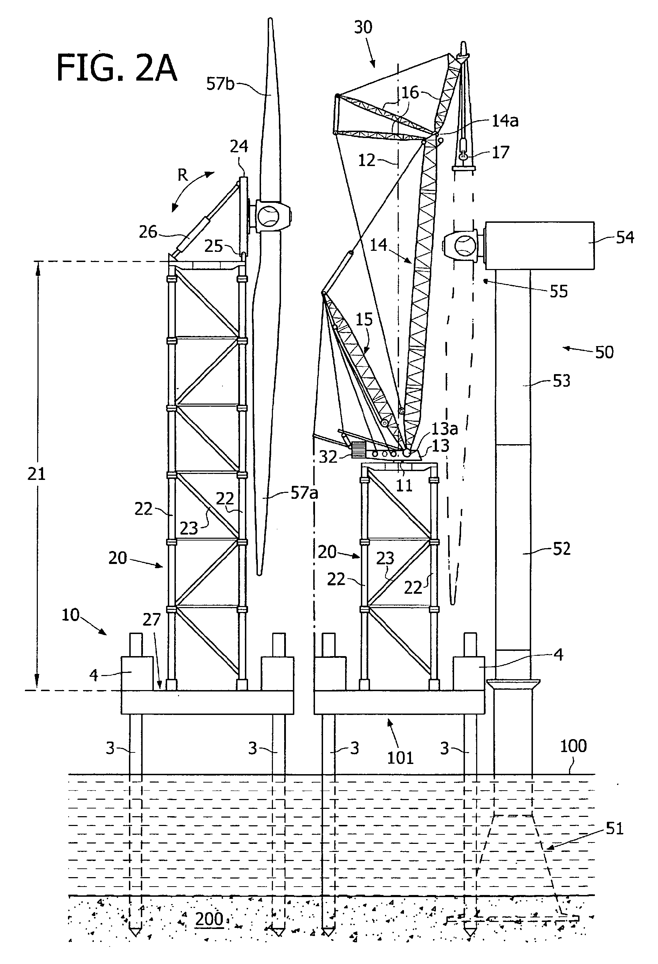

Referring to figure 1A, a device is shown for assembling a wind turbine 50 at sea. The device comprises a support structure 20 arranged on a transport vessel in the form of a jack-up platform 10, wherein a part 24 of support structure 20 is tiltable around a horizontal axis in the indicated direction R1 by means of a hinge connection 25. Rotatable part 25 is provided with fixing means (not shown), such as for instance bolts, for the fixing a component of wind turbine 50, and in particular rotor 55. Rotor 55 comprises an assembly of a hub 56, on which three rotor blades (56a, 56b, 56c) are mounted. It is also possible for hub 56 to be provided with only one, two or, conversely, more than three rotor blades. Rotatable part 24 can be moved from a transport position as shown in figure 1A, in which rotor 55 with the rotor blades is transported in horizontal position, to an assembly position as shown in figure 2A by being tilted around hinge 25. The necessary force can for instance be provided by hydraulic piston 26, although any other suitable method of force transmission is also possible. In the shown embodiment the transport position corresponds to a position in which the rotor blades (57a, 57b, 57c) extend substantially parallel to deck 27 of platform 10, while the assembly position corresponds to a position in which the rotor blades (57a, 57b, 57c) extend substantially perpendicularly of deck 27 of platform 10.

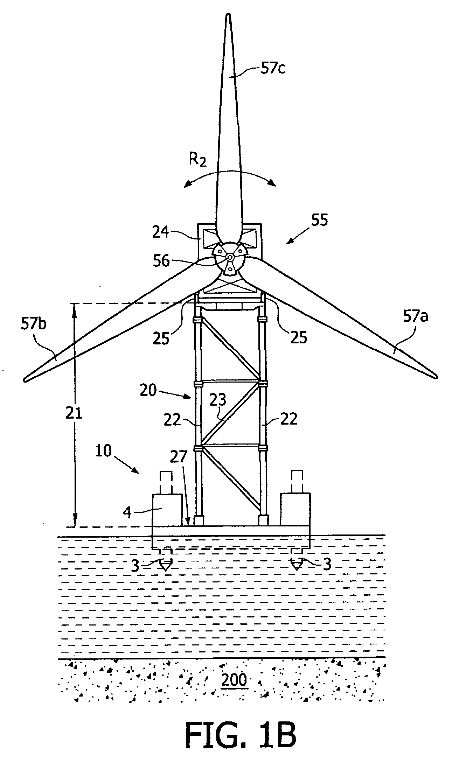

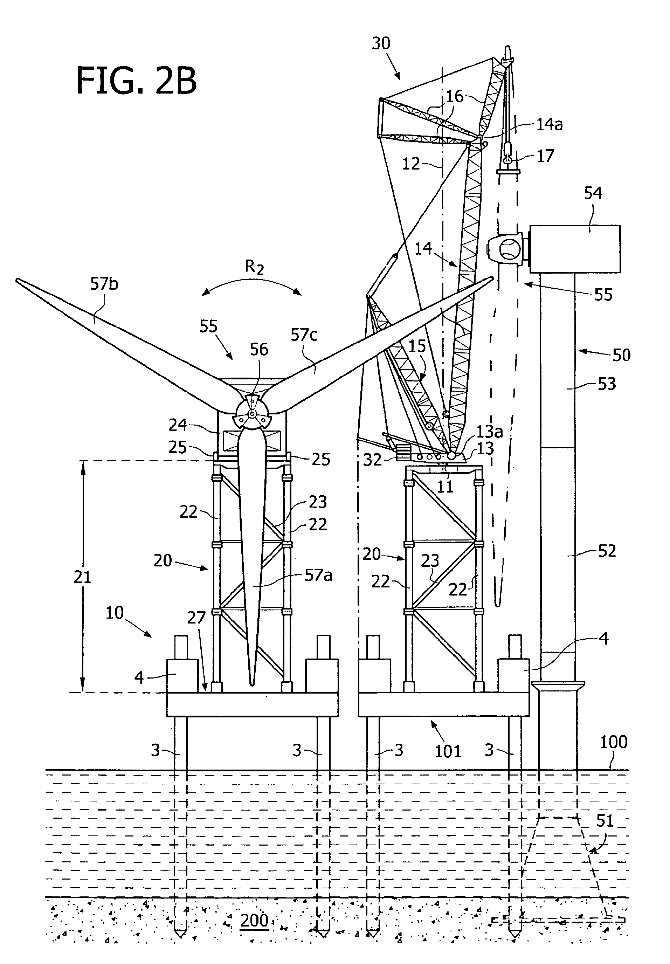

Referring to figure 1B, the device as already shown in figure 1A is shown. In this embodiment however, part 24 of support structure 20 is placed in the upright tilted position, whereby the transport position corresponds to a position in which the rotor blades (57a, 57b, 57c) extend substantially perpendicularly of deck 27 of platform 10. Rotor 55 is therefore transported into vertical position. According to the present embodiment, part 24 is likewise rotatable around a horizontal axis so that rotor 55 can be anchored in different rotation positions (in the direction R2). The transport position shown in figure 2B corresponds to a position rotated in the direction R2, in which one rotor blade 57c is placed substantially vertically and the two remaining rotor blades (57a, 57b) are placed at the same angle to the water surface. In this position the distance from hub 56 of rotor 55 to the top of the two rotor blades (57a, 57b) is minimal, whereby hub 56 need not be placed very high above the water surface.

Rotor 55 can be moved from the vertical transport position shown in figure 1B, in which one rotor blade 57c is placed substantially vertically, to the assembly position shown in figure 2B by rotating the part 24 in the direction R2. In the shown embodiment the transport position corresponds to a position in which rotor blade 57a extends substantially vertically and protrudes over the edge of platform 10. Rotor blades (57b, 57c) extend at substantially the same angle to the water surface. This assembly position is advantageous for the manipulation of rotor 55 with a lifting device 30.

The support structure of the device according to the invention comprises a tower in the form of a framework 20 provided with uprights 22 and transverse beams 23, the cross-sections of which are large enough to be able to support the necessary loads. In the shown embodiment movable part 24 is situated on top of tower framework 20. This latter is preferably height-adjustable, wherein the height 21 of tower 20 with rotor 55 will generally be lower in the transport position (figure 1) than the height 21 of tower 20 with rotor 55 in the assembly position (figure 2). The maximum height of tower 20 can be freely chosen. In view of the dimensions of rotor blades, the maximum height of tower 20 is preferably at least 20 metres above work deck 27 of transport vessel 10, more preferably at least 30 metres, and most preferably at least 35 metres above work deck 27 of transport vessel 10.

The jack-up offshore platform 10 comprises a work deck 27 which can bear a substantial load, typically of more than 1000 tons, and is provided with anchor piles 3 which support work deck 27. Each anchor pile 3 extends substantially vertically and is movable in this direction from a high position during transport (shown in figure 1) to a low position in the anchored position (shown in figure 2), in which position piles 3 support on seabed 200. The height position of work deck 27 relative to water level 100 can be changed by shifting work deck 27 relative to piles 3 by means of hydraulic pistons 4.

Transport vessel or platform 10 provided with the device according to the invention is generally moored in the immediate vicinity of a second jack-up platform 101 as shown in figure 2. Parts of platform 101 comparable to parts of platform 10 are designated in the figures with the same numerals as those of platform 10 and not further described here. Reference is made to the description thereof in respect of platform 10.

Platform 101 is anchored in the immediate vicinity of the wind turbine 50 to be assembled and/or maintained, which is shown in semi-finished state and which is anchored in seabed 200 by foundation 51. In the shown semi-finished state wind turbine 50 comprises, in addition to foundation 51, two mast parts (52, 53) and a gondola 54. Mast parts (52, 53) and gondola 54 have already been put in place by a lifting device 30 provided on platform 101. Any suitable lifting device 30 can in principle be applied. In the shown embodiment lifting device 30 substantially comprises two parts. The first part comprises a structure which is connected pivotally to point of rotation 13a and which comprises at least a main boom 14 for manipulating rotor 55 of wind turbine 50. A turntable 11 is provided which can rotate main boom 14 around a vertical axis 12 relative to platform 101. Lifting device 30 further comprises a frame 13 which supports main boom 14 in rotatable manner and a second boom 15. Additional booms 16 can likewise rotate around point of rotation 14a of main boom 14. The booms are mutually connected by means of cables. Rotor 55 can be secured to the lifting device by means of gripper means 17 and then be manipulated, for instance lifted, rotated and so on. Lifting device 101 also comprises a counterweight 32 which is connected to frame 13 for movement from a position toward and away from point of rotation 13a of main boom 14. Optionally incorporated in the cables are force sensors (not shown) which are connected to a control system for regulating the cable tension.

According to the embodiment of the invention shown in the figures, a method is provided for assembly of a wind turbine 50 at sea. The method comprises of providing a transport vessel 10 as shown in figure 1A, arranging rotor 50 of wind turbine 50 on movable part 24 of the device using the fixing means (not shown), transporting rotor 50 using transport vessel 10, wherein rotor 50 is situated in a preferably horizontal transport position (substantially parallel to work deck 27), tilting movable part 24 around a horizontal axis R from the transport position shown in figure 1A to the assembly position shown in figure 2A, wherein rotor 50 is rotated relative to the transport position and preferably extends substantially perpendicularly of work deck 27 of platform 10. An alternative method comprises of providing a transport vessel 10 as shown in figure 1B, arranging rotor 50 of wind turbine 50 on movable part 24 of the device using the fixing means (not shown), transporting rotor 50 using transport vessel 10, wherein rotor 50 is situated in a vertical transport position (substantially perpendicularly of work deck 27), rotating movable part 24 around a horizontal axis R2 from the transport position shown in figure 1B to the assembly position shown in figure 2B, wherein rotor 50 is rotated relative to the transport position.

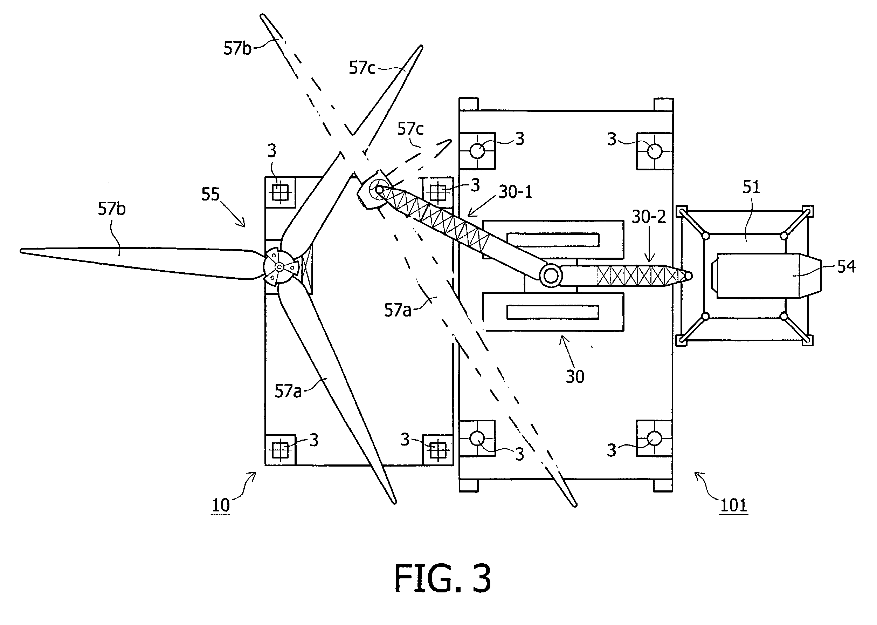

By moving rotor 50 from the transport position shown in figures 1A and 1B to the assembly position (this position is shown in figures 2A and 2B) it can be transferred easily to the semi-finished wind turbine 50 by means of lifting device 30 and arranged thereon in the assembly position (the assembly position during arranging is shown schematically in figures 2A and 2B by the rotor in broken lines). During transfer of rotor 50 the lifting device will be moved from a position 30-1 to a position 30-2 (figure 3). In position 30-1 rotor 55 is already in the assembly position. The method and device according to the invention avoid the use of tailing cranes present on platform 10 and/or 101 in the existing method.

The invention is not limited to the embodiments shown in the figures, and many variants thereof are possible within the scope of protection of the appended claims.

## Claims

1. Device for assembling a large structure at sea, particularly a wind turbine (50), which device comprises a support structure (20) for a component (55) of the structure which can be arranged on a transport vessel (10), wherein a part (24) of the support structure (20) is movable from a transport position, in which the component (55) is transported, to an assembly position in which the component (55) is rotated and/or tilted relative to the transport position, wherein the movable part (24) is also provided with fixing means for fixing of the component, **characterized in that** the support structure (20) comprises a tower, and that the movable part (24) is situated at the top of the tower.

2. Device as claimed in claim 1, **characterized in that** the movable part (24) is tiltable around a horizontal axis.

3. Device as claimed in claim 2, **characterized in that** the movable part (24) is rotatable around a horizontal axis.

4. Device as claimed in any of the foregoing claims, **characterized in that** the tower is height-adjustable.

5. Device as claimed in claim 4, **characterized in that** the tower has a maximum height of at least 30 metres above the work deck (27) of the transport vessel (10).

6. Method for assembling a large structure at sea, particularly a wind turbine (50), the method comprising of providing a device as claimed in any of the foregoing claims on a transport vessel (10), arranging a component (55) of the structure on the movable part (24) of the device using the fixing means, transporting the component (55) using the transport vessel (10), wherein the component (55) is situated in a transport position, optionally moving the movable part (24) of the support structure (20) from the transport position to an assembly position, wherein the component (55) is rotated and/or tilted relative to the transport position, and arranging the component (55) on the structure in the assembly position.

7. Method as claimed in claim 6, **characterized in that** the movable part (24) of the support structure (20) is moved from the transport position to the assembly position such that the component (55) is tilted around a horizontal axis relative to the transport position.

8. Method as claimed in claim 6 or 7, **characterized in that** the movable part (24) of the support structure (20) is moved from the transport position to the assembly position such that the component (55) is rotated around a horizontal axis relative to the transport position.

9. Method as claimed in any of the claims 6 - 8, **characterized in that** the component (55) to be transported, rotated and/or tilted comprises a gondola or nacelle, and/or a hub, and/or one or more rotor blades of a wind turbine.

## Patentansprüche

1. Einheit zum Zusammenbauen einer großen Struktur auf dem Meer, insbesondere eine Windturbine (50), wobei die Einheit eine Stützstruktur (20) für eine Komponente (55) der Struktur umfasst, die auf einem Transportschiff (10) angeordnet werden kann, wobei ein Teil (24) der Stützstruktur (20) von einer Transportposition, in der die Komponente (55) transportiert wird, in eine Zusammenbauposition bewegt werden kann, in der die Komponente (55) relativ zur Transportposition gedreht und/oder gekippt wird, wobei der bewegliche Teil (24) mit einem Befestigungsmittel zum Befestigen der Komponente versehen ist, **dadurch gekennzeichnet, dass** die Stützstruktur (20) einen Turm umfasst und dass der bewegliche Teil (24) sich oben am Turm befindet.

2. Einheit nach Anspruch 1, **dadurch gekennzeichnet, dass** der bewegliche Teil (24) um eine horizontale Achse kippbar ist.

3. Einheit nach Anspruch 2, **dadurch gekennzeichnet, dass** der bewegliche Teil (24) um eine horizontale Achse drehbar ist.

4. Einheit nach einem der vorstehenden Ansprüche, **dadurch gekennzeichnet, dass** der Turm höhenverstellbar ist.

5. Einheit nach Anspruch 4, **dadurch gekennzeichnet, dass** der Turm eine maximale Höhe von mindestens 30 m über dem Arbeitsdeck (27) des Transportschiffes (10) aufweist.

6. Verfahren zum Zusammenbauen einer großen Struktur auf dem Meer, insbesondere eine Windturbine (50), wobei das Verfahren das Bereitstellen einer Einheit nach einem der vorstehenden Ansprüche auf einem Transportschiff (10) umfasst, das Anordnen einer Komponente (55) der Struktur unter Verwendung des Befestigungsmittels auf dem beweglichen Teil (24) der Einheit, das Transportieren der Komponente (55) mit dem Transportschiff (10), wobei sich die Komponente (55) in einer Transportposition befindet, das optionale Bewegen des beweglichen Teils (24) der Stützstruktur (20) von der Transportposition in eine Zusammenbauposition, wobei die Komponente (55) relativ zur Transportposition gedreht und/oder gekippt wird, sowie das Anordnen der Komponente (55) auf der Struktur in der Zusammenbauposition.

7. Verfahren nach Anspruch 6, **dadurch gekennzeichnet, dass** der bewegliche Teil (24) der Stützstruktur (20) von der Transportposition in die Zusammenbauposition bewegt wird, so dass die Komponente (55) relativ zur Transportposition um eine horizontale Achse gekippt wird.

8. Verfahren nach Anspruch 6 oder 7, **dadurch gekennzeichnet, dass** der bewegliche Teil (24) der Stützstruktur (20) von der Transportposition in die Zusammenbauposition bewegt wird, so dass die Komponente (55) relativ zur Transportposition um eine horizontale Achse gedreht wird.

9. Verfahren nach einem der Ansprüche 6 bis 8, **dadurch gekennzeichnet, dass** die zu transportierende, zu drehende und/oder zu kippende Komponente (55) eine Gondel oder ein Maschinenhaus und/oder eine Nabe und/oder eines oder mehrere Rotorblätter umfasst.

## Revendications

1. Dispositif pour assembler une grande structure en mer, notamment une turbine éolienne (50), lequel dispositif comprend une structure de support (20) pour un composant (55) de la structure qui peut être disposé sur un bâtiment de transport (10), étant entendu qu'une partie (24) de la structure de support (20) est mobile depuis une position de transport dans laquelle le composant (55) est transporté, jusqu'à une position d'assemblage dans laquelle on fait tourner et/ou basculer le composant (55) par rapport à la position de transport, étant entendu que la partie mobile (24) est aussi pourvue de moyens de fixation pour fixer le composant, **caractérisé en ce que** la structure de support (20) consiste en une tour et **en ce que** la partie mobile (24) est située au sommet de la tour.

2. Dispositif selon la revendication 1, **caractérisé en ce que** la partie mobile (24) peut basculer autour d'un axe horizontal.

3. Dispositif selon la revendication 1, **caractérisé en ce que** la partie mobile (24) peut tourner autour d'un axe horizontal.

4. Dispositif selon l'une quelconque des revendications précédentes, **caractérisé en ce que** la tour est réglable en hauteur.

5. Dispositif selon la revendication 4, **caractérisé en ce que** la tour a une hauteur maximale d'au moins 30 mètres au-dessus du pont de travail (27) du bâtiment de transport (10).

6. Procédé pour assembler une grande structure en mer, notamment une turbine éolienne (50), le procédé consistant à réaliser un dispositif selon l'une quelconque des revendications précédentes sur un bâtiment de transport (10), à disposer un composant (55) de la structure sur la partie mobile (24) du dispositif en utilisant les moyens de fixation, à transporter le composant (55) en utilisant le bâtiment de transport (10), étant entendu que le composant (55) est situé dans une position de transport, à déplacer facultativement la partie mobile (24) de la structure de support (20) de la position de transport à une position d'assemblage, étant entendu que l'on fait tourner et/ou basculer le composant (55) par rapport à la position de transport, et à agencer le composant (55) sur la structure dans la position d'assemblage.

7. Procédé selon la revendication 6, **caractérisé en ce que** la partie mobile (24) de la structure de support (20) est déplacée de la position de transport à la position d'assemblage de telle sorte que le composant (55) bascule autour d'un axe horizontal par rapport à la position de transport.

8. Procédé selon la revendication 6 ou 7, **caractérisé en ce que** la partie mobile (24) de la structure de support (20) est déplacée de la position de transport à la position d'assemblage de telle sorte que le composant (55) tourne autour d'un axe horizontal par rapport à la position de transport.

9. Procédé selon l'une quelconque des revendications 6-8, **caractérisé en ce que** le composant (55) à transporter, à faire tourner et/ou basculer consiste en une gondole ou nacelle et/ou en un moyeu et/ou en une ou plusieurs pales du rotor d'une turbine éolienne.
